# EUROPEAN PATENT SPECIFICATION

(11) **EP 0 376 591 B1**
(45) Date of publication and mention of the grant of the patent: **02.08.1995**
(21) Application number: 89313293.6
(22) Date of filing: 19.12.1989
(51) Int. Cl.: C08F 30/02, C09D 201/02, C09D 7/12, C09J 201/02, C09J 11/04

(54) **Phosphorus-containing polymer compositions comprising watersoluble polyvalent metal compounds**
Phosphor enthaltende Polymer-Zusammensetzungen in Kombination mit wasserlöslichen Verbindungen mehrwertiger Metalle
Compositions de polymères contenant du phosphore comprenant des composés de métaux polyvalents solubles dans l'eau

(30) Priority: 29.12.1988 US 291816
(43) Date of publication of application: 04.07.1990
(73) Proprietor: ROHM AND HAAS COMPANY, Philadelphia Pennsylvania 19105 (US)
(72) Inventor: Del Donno, Theodore Anthony, Norristown Pennsylvania 19403 (US)
(74) Representative: Angell, David Whilton

(56) References cited:
- US-A- 4 264 363
- US-A- 4 467 071

## Description

This invention is concerned with phosphorus-containing polymer compositions, a process for producing such compositions, and uses of the compositions. The compositions find particular use in coatings and adhesive compositions.

Air-dried coatings based on aqueous polymeric emulsions are widely used in industrial applications. It is known that the properties of these polymers can be modified by bonding metals to the polymer molecules. Bonding the metal to the polymer is typically attained by the formation of ionic bonds. In ionic bonding, the metals are usually bonded to an ionic group in the polymer such as a carboxylic acid group. The ionically bonded polymers, however tend to lose their structural stability in polar solvents, such as water or alcohol, and at high temperatures. Thus, polymeric coatings and adhesives which are crosslinked through ionic bonding are subject to attack and deterioration by chemical solvents, moisture and by thermal degradation.

Polymeric compositions which are ionically crosslinked are disclosed in US-A-3,740,366; US-A-3,322,734; and US-A-2,754,280. The '366 patent teaches pressure sensitive adhesives ionically crosslinked by a polyvalent metal and free carboxylic acid groups. The '734 patent teaches ionically crosslinked copolymers containing ionized carboxyls or ionized sulfonyls and metal ions as an ionic linking agent. The '280 patent disclosed emulsions of ionically cross-linked resins wherein pairs of carboxyl groups in the molecular chains are crosslinked by atoms of polyvalent metals.

The prior art compositions based on carboxyl/polyvalent metal cross-linking have disadvantages in many properties such as solvent resistance, print resistance, block resistance, storage stability and adhesion. Attempts have been made to improve the properties of polymeric coating and adhesive compositions by incorporating therein phosphorous-containing polymers.

GB-A-958,856 discloses copolymers suitable for use in coating compositions which are derived from 1) esters of acrylic or methacrylic acid; 2) a methylol compound; and 3) a mixed ester of a diol esterified with (meth)acrylic acid and an organic or inorganic acid (such as phosphoric acid).

US-A-3,449,303 discloses polymers of phosphate esters derived from allyloxy and allyloxyalkoxy phosphates and having improved dyeability.

US-A-4,110,285 discloses a process for preparing a stable aqueous emulsion of addition polymers using a mixture of phosphate esters as an emulsion stabilizer during the polymerization process.

EP-A-0221498 discloses anticorrosive copolymer emulsion prepared from ethylenically unsaturated monomers and a polymerizable surface-active alkylphosphate monomer.

US-A-4,477,623 disclosed an improved paint composition comprising; 1) a water-insoluble addition polymer prepared from styrenes, acrylates, methacrylates, vinyl esters and vinyl chloride (including at least one monomer containing a phosphoric, sulphonic or carboxylic acid group 2)anionic or non-ionic emulsifier, 3) polyoxyethylene-chain-containing compound and 4) alkali-soluble addition polymer.

US-A-4,506,057 discloses a modified latex composition comprising at least one ethylenically unsaturated monomer and a compound having a - PO(O)₂ group which is bound to the surface of the latex. These compositions may contain various water-insoluble inorganic fillers such as zinc oxide.

JP-61-143411 discloses an acrylic coating material consisting of a copolymer of 90-99.9 wt.% of copolymerizable monomer and 0.1-10 wt.% of phosphoric acid ester.

US-A-4,658,003 discloses polymeric compositions comprising the reaction product of 0.5-100% of a (hydroxyl) -phosphinyl-alkyl acrylate or methacrylate and 0-99.5% of a methacrylate and 0-99.5% of a polymerizable 1,2-ethylenically unsaturated compound.

The present invention is an improvement over the prior art compositions of carboxyl or phosphorus-containing polymers.

It is an object of this invention to provide coating and adhesive compositions which may have improved solvent, chemical, print and corrosion resistance and adhesion to metal. It is a further object of this invention to provide improved phosphorus-containing polymer compositions which contain water-soluble polyvalent metal crosslinking agents instead of water-insoluble metal crosslinkers. It is an even further object of this invention to provide polymeric compositions which may be curable at ambient temperatures. Further, it is an object of the present invention to provide film-forming polymeric compositions which may be stable as a one-container system without the necessity of pre-mixing of ingredients immediately prior to use.

According to a first aspect of the present invention there is provided a process comprising applying to a substrate a polymer composition comprising a) one or more polymer(s) having pendant and/or terminal phosphorus group(s), wherein the phosphorus group(s) is (are) derived from a polymerizable monomer having a phosphorus group; and b) one or more water-soluble polyvalent metal compound(s); and crosslinking the phosphorus groups with the polyvalent metal compound.

According to a second aspect of the present invention there is provided a process of preparing a polymer composition for subsequent use as a coating and adhesive, the process comprising polymerising a polymerisable monomer having a phosphorus group to form a polymer having pendant and/or terminal phosphorus groups; and blending the polymer with one or more water-soluble polyvalent metal compound(s).

According to a third aspect of the present invention there is provided an aqueous polymer composition for subsequent use as a coating and adhesive comprising a) one or more polymer(s) having pendant and/or terminal phosphorus group(s), wherein the phosphorus group(s) is (are) derived from a polymerizable monomer having a phosphorus group; b) one or more water-soluble polyvalent metal compound(s); and c) water.

In accordance with one embodiment of the present invention, we provide an aqueous polymer composition comprising in combination a) one or more polymer(s) containing pendant and/or terminal phosphorus group(s) and b) one or more water-soluble polyvalent metal compound(s) functioning as a crosslinking agent; wherein the one or more polymer(s) having pendant and/or terminal phosphorus groups is (are) obtainable from a polymerisable monomer having a phosphorus group. The compositions may additionally contain a volatile chelating agent, such as, for example, volatile ammonia, amines, beta-ketoesters, beta-diketones and acetyl acetone. Preferred polyvalent metal compounds are salts of Co⁺², Ni⁺², Zn⁺² and/or Zr⁺². Preferred polyvalent metal compounds are acetates, benzoates, nitrates and/or carbonates. Most preferred polyvalent metal compounds include the acetates, benzoates, nitrates and/or carbonates of Co⁺², Ni⁺², Zn⁺² and/or Zr⁺². The compositions of the present invention may be useful in a variety of coatings and adhesives applications, having improved solvent resistance, chemical resistance, print resistance, corrosion resistance and/or adhesion to metal surfaces.

The present invention involves novel polymeric compositions which find utility as ambient-curable coatings and adhesives having improved solvent resistance, chemical resistance, print resistance, corrosion resistance and/or adhesion to metal surfaces. This invention specifically relates to polymeric compositions comprising in combination a) one or more polymer(s) containing pendant or terminal (or both) phosphorus group(s) and b) one or more water-soluble polyvalent metal compound(s) functioning as a crosslinking agent.

The polymers which are useful in this invention preferably include homopolymers and copolymers of: (1) vinyl esters of an aliphatic acid having 1 to 18 carbon atoms, such as vinyl acetate; (2) acrylate and methacrylate, such as acrylic acid esters and methacrylic acid esters of an alcohol having 1 to 18 carbon atoms, for example methyl acrylate, ethyl acrylate, butyl acrylate, 2-ethyl hexyl acrylate, methyl methacrylate, ethyl methacrylate and butyl methacrylate; and (3) mono-and di-ethylencially unsaturated hydrocarbons, such as ethylene, isobutylene, styrene, aliphatic dienes (such as butadiene, isoprene, and chloroprene) and the like. The polymers preferably include copolymers of acrylic or methacrylic acid esters with one or more of the following monomers: vinyl chloride, vinylidene chloride, styrene, vinyltoluene, acrylonitrile, and methacrylonitrile. Suitable polymers also include copolymers of one or more of the above hydrocarbons with one or more nitriles or amides of acrylic acid, methacrylic acid or vinyl esters. The polymers may be used as emulsions, suspensions, or solutions of the polymers in water or organic solvents, preferably as aqueous emulsions. The polymer particles can be single-stage or multi-stage. The present invention is especially suitable for use in acrylic latex type compositions such as described in US-A-4,129,448; US-A-4,102,843; US-A-3,740,366; and US-A-3,736,286. Preferably, the polymers for use in this invention are thermoplastic and have a glass transition temperature from about -50°C to about 100°C, more preferably 20-60°C. A suitable concentration of total polymers present in the compositions of this invention ranges from 30% to 99% by weight based on the total dry weight of the composition. The concentration of polymers which contain no phosphorus groups preferably range from about 50% to about 98% by weight based on the total weight of polymers in the composition.

It is critical to the practice of this invention that at least one of the polymers contain pendant and/or terminal phosphorus groups. Suitable phosphorus-group-containing polymers would include the polymers mentioned above which have a preferred molecular weight (measured by gel permeation chromatography) of about 400 or greater and/or preferably have at least two phosphorus groups per molecule. The phosphorus groups can be phosphate, phosphonate or phosphinate. Preferably the phosphorus-group-containing polymer is an acrylic polymer or copolymer having a molecular weight of about 500,000 or greater and from about 4 to about 5 phosphorus groups per molecule. The phosphorus-group-containing polymers may be prepared by reacting the basic polymer and/or corresponding polymerizable monomers with suitable monomers containing phosphate, phosphonate or phosphinate functionality following conventional polymerization processes such as disclosed in US-A-4,658,003.

Phosphorus-containing monomers and the preparation thereof are described in US-A-3,355,364. The preferred monomers for preparing the phosphorus-group-containing polymer are phosphoethylmethacrylate, phospho-di(ethyl methacrylate), and allyl phosphate represented by the formula I, II and III, respectively.

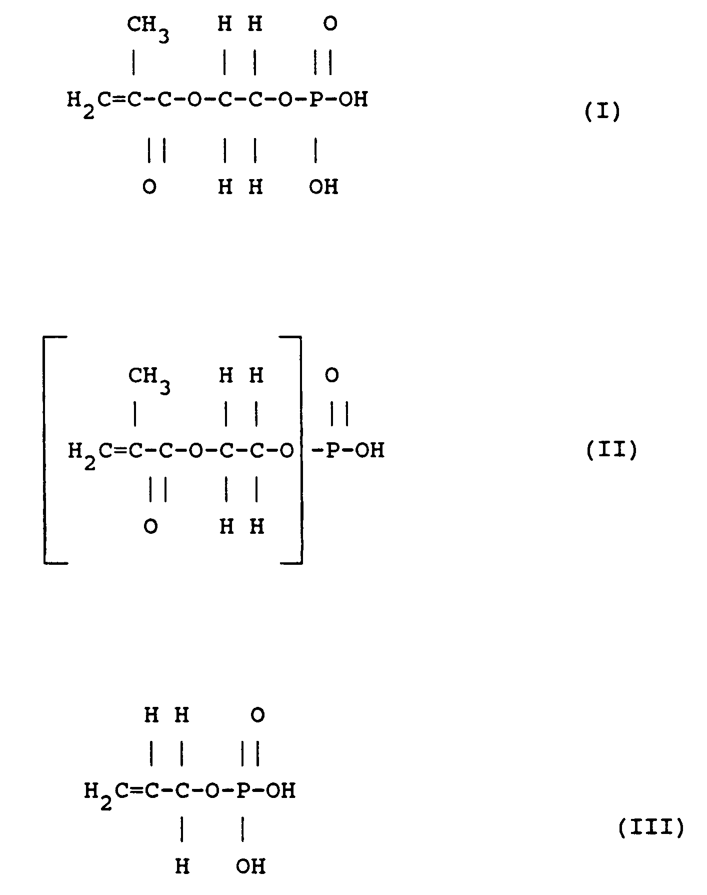

A preferred level of phosphorus-group-containing polymers for use in the compositions of this invention is from about 2% to about 50% by weight based on the total weight of polymer in the composition.

Preferably the phosphorus groups have the formula. 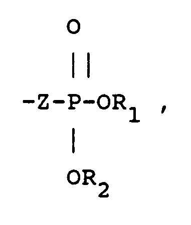
where R_{1and} R₂
independently are H or (C_{1-C12}) alkyl or aryl and Z is -O- or -C-.

It is also critical to the practice of this invention that the polymeric compositions contain one or more water-soluble polyvalent metal compounds functioning as crosslinking agents. Suitable polyvalent metals include those such as elements 21 through 30 of the Periodic Table of the Elements. The preferred polyvalent metal compounds include the metal acetates, benzoates, nitrates, carbonates and the like, although any water-soluble polyvalent metal compound would be suitable for use in this invention. A preferred level of polyvalent metal for this invention ranges from about 1:4 to about 2:1 polyvalent metal to phosphorus-groups. More preferably the molecular ratio of polyvalent metal to phosphorus-groups ranges from about 1:2 to about 2:1.

The compositions of this invention may also include a volatile chelating agent which functions to block the polyvalent metal while in solution. This prevents premature crosslinking of the metal with the polymer-bound phosphorus-groups until the volatile chelating agent has evaporated. Thus, the invention produces coatings and adhesives compositions which exhibits long-term storage stability in a one container system, and which are curable at ambient temperature by air drying. Suitable, volatile chelating agents include, for example, ammonia; amines, such as morpholine, monoethanolamine, diethylamino ethanol, triethylamine and triethanol amine; acetylacetone; β-diketones; and β-ketoesters. The preferred β-diketones are represented by the formula: 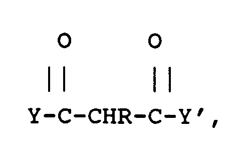
where R is -H, lower (preferably C₁-C₆) alkyl or aryl; and Y and Y' independently are aryl or -CXX'B where X and X' independently are -H or halogen and B is -H, halogen or (preferably C_{1Y-C6}) lower alkyl. Suitable β-diketones include, for example, 2,4-pentanedione, 2,4-hexanedione, 2,4-heptanedione, 5-methyl-2, 4-hexanedione, 5,5-dimethyl-2, 4-hexanedione, 3-methyl-2, 4-pentanedione, 1,1,1-trifluoro-2, 4-pentanedione, 3-benzyl, 2,4-pentanedione and the like. The preferred β-ketoesters can be represented by the formula: 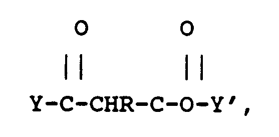
where Y, Y' and R are as defined above.

Preferred β-ketoesters include, for example, methyl acetoacetate, ethylacetoacetate, alpha-methyl-ethyl acetoacetate, alpha-n-butyl ethyl acetoacetate, alpha-secbutyl alpha-ethylethyl acetoacetate and the like. The volatile chelating agents may be used at a level of at least two moles of chelating agent per mole of metal, preferably at a molar excess of chelating agent to metal.

The processes of the present invention preferably yield compositions containing a solvent which preferably comprises from about 40% to about 80% by weight of the total composition. Suitable solvents include water and organic solvents such as alcohols, glycol ethers, aromatics, ketones and acetates. These include, for example, methanol, ethanol, toluene, xylene, acetone, methyl ethyl ketone, butyl acetate and the like. Most preferably the compositions prepared by this invention are aqueous emulsions.

The compositions optionally may include other traditional additives for coatings and adhesives, such as thickeners, pigments, stabilizers and the like, provided that these do not interfere with the crosslinking of the polyvalent metal with the phosphorous groups: The amount of these optional additives can be determined by methods known in the art, but are preferably less than 70% by weight of the total solids content of the compositions.

The compositions may be prepared by blending the ingredients to obtain a homogenous mixture. The polyvalent metal is preferably added as an aqueous solution which preferably has a pH of about 9-10. The phosphorous-group-containing polymer(s) may be cold blended into the compositions without the necessity of grafting these polymers onto the other polymers in the composition. It is believed that the cured composition forms an interpenetrating polymer network resulting from polyvalent metal and phosphorous group crosslinking and chain entanglement. The compositions may be applied to a substrate by a variety of techniques such as brushing, spraying, dipping or rolling. They may be air-dried and cured at ambient temperatures from about 5°C or higher to obtain films with dramatically improved performance properties. The compositions of this invention may be useful in a variety of applications such as paints, coatings, adhesives, caulks and mastics.

The following examples are presented to demonstrate this invention. All parts and percentages are by weight unless otherwise indicated.

### EXAMPLE I

A phosphorus-group-containing polymer within the scope of this invention was prepared by the following procedure:

A 3 liter, 4-necked, round-bottom flask with a blade stirrer, condenser, nitrogen inlet, thermometer and inlets for adding monomer emulsion and initiator solution was charged with 690g. deionized water and 3.3g. soap (Siponate DS-4; 23% active). This solution was heated to 80°C under a flow of nitrogen.

A monomer emulsion was prepared by adding 577.2g. butyl acrylate and 490.6g. methyl methacrylate to a solution of 16.4g. soap (Siponate DS-4) in 603g. of deionized water. A portion (101g.) of the monomer emulsion was reserved to make a preform seed and 42.2g. of phosphoethyl methacrylate (Kayamer PM-1 available from Nippon Kayaku Co., Ltd.) was added to the remainder of the monomer emulsion.

The 101g. of reserved monomer emulsion above was added to the reaction flask, followed by a solution of 3.12g. ammonium persulfate dissolved in 23g. deionized water. The reaction mixture was allowed to polymerize for 5 minutes and the temperature was maintained at 80°C . The remaining portion of the monomer emulsion and an initiator solution of 0.56g. ammonium persulfate in 60g. deionized water were added separately and uniformly over 180 minutes while maintaining a reaction temperature of 80°C. At the conclusion of the feeds of monomer emulsion and initiator solution, the reaction was maintained at 80°C for 30 minutes and then cooled to 55°C. The reaction was finished-off by adding 11.1g. of an 0.15% aqueous solution of FeSO₄·7H₂O, 0.32g. t-butyl hydroperoxide in 19g. deionized water and 0.14g. sodium sulfoxylate formaldehyde in 19g. deionized water and maintaining temperature of 80°C for 20 minutes. The final product was cooled and filtered through a 100 mesh screen.

The resulting phosphorus-group-containing latex had a composition by weight of 52% butyl acrylate, 44.2% methyl methacrylate and 3.8% phosphoethyl methacrylate. This latex had a total solids of 42.2%, viscosity of 16 mNsm⁻² (centipoise) and particle size of 155 nanometers.

### Example II

A phosphorus-containing polymer within the scope of this invention was prepared by the following procedure:

A 3-liter, 4-necked, round-bottom flask with a stirrer, condenser, nitrogen inlet, thermometer and inlets for adding monomer emulsion and initiator/buffer solution was charged with 916g. deionized water and 12.0g of soap (Alipal CO-436, 58% active). This solution was heated to 80°C under a flow of nitrogen.

A monomer emulsion was prepared by adding 516.4g. of butyl acrylate, 473.1g. of methyl methacrylate, 26.4g. of methacrylic acid and 40.1g. of phosphoethyl methacrylate to a solution of 6.2g. of soap in 264g. of deionized water.

A portion (90.5g.) of the monomer emulsion was added to the reaction flask followed by a solution of 2.1g. ammonium persulfate dissolved in 37.7g. deionized water. The reaction mixture was allowed to polymerize for about 20 to 30 minutes. Then the remaining portion of the monomer emulsion and an initiator/buffer solution of 0.75g. of ammonium persulfate dissolved in 256g. of deionized water containing 6.8g. of ammonia (28%) were added separately and uniformly over 150 minutes while maintaining a reaction temperature of 80°C. At the conclusion of the feed of the monomer emulsion and initiator/buffer solution the reaction was maintained at 80°C for an additional 30 minutes and then cooled to 70°C.

The reaction was finished-off by adding 10.6g. of an 0.15% aqueous solution of FeSO4·7H20, 1.5g. t-butyl hydroperoxide (70%) in 37.7g. of deionised water and 1.06g. of sodium sulfoxylate formaldehyde in 37.7g. of deionized water and maintaining a temperature of 70°C for 30 minutes.

The final product was cooled and filtered through a 100 mesh screen. The resulting phosphorus-group-containing latex had a composition by weight of 48.9% butyl acrylate, 44.8% methyl methacrylate, 2.5% methacrylic acid and 3.8% phosphoethyl methacrylate. The latex had a total solids of 39.8%, viscosity of 18 mNsm⁻² (centipoise) and average particle size of 106 monometers.

### Example III

A phosphorus-containing polymer within the scope of this invention was prepared following the procedures of Ex. II, except that the monomers and amounts thereof were altered to give a polymer having the composition by weight of 47.8% butyl acrylate, 43.6% methyl methacrylate and 8.6% phosphoethyl methacrylate. The resulting latex had a total solids of 39.6%, viscosity of 32 mNsm⁻² (centipoise) and average particle size of 104 nanometers.

### Example IV

A phosphorus-containing polymer within the scope of this invention was prepared by the following procedure:

A 5-liter, 4-necked, round-bottom flask with a stirrer, condenser, nitrogen inlet, thermometer and inlets for adding monomer emulsion and initiator solution was charged with 1630g. deionized water and 18.4g. of soap.

A monomer emulsion was prepared by adding 710.5g. of 2-ethylhexyl acrylate, 463.9g. of styrene, 450g. of acrylonitrile, 92.3g. of methacrylic acid and 61.7g. of phosphoethyl methacrylate to a solution of 57.5g. of soap in 380g. of deionized water.

A portion (100g.) of the monomer emulsion was added to the reaction flask followed by a solution of 3.60g. ammonium persulfate dissolved in 45g. deionized water. The flow of nitrogen was stopped and the reaction mixture was allowed to polymerize for 20 minutes. A solution of 3.6g. of sodium carbonate dissolved in 45g. of deionized water was added to the flask. Then the remaining portion of the monomer emulsion and an intitiator solution of 0.90g. of ammonium persulfate dissolved in 120g. of deionized water containing 3.1g. of soap were added separately and uniformly over 180 minutes while maintaining a reaction temperature of 80°C. At the conclusion of the feed of the monomer emulsion and initiator solution, the monomer emulsion was rinsed into the flask with 40g. of deionized water and reaction was maintained at 80°C for an additional 30 minutes and then cooled to 70°C.

The reaction was finished-off by adding 18.0g. of an 0.15% aqueous solution of FeSO₄·7H20, 2.6g. t-butyl hydroperoxide (70%) ("t-BHP") in 15g. of deionized water and 1.8g. of sodium sulfoxylate formaldehyde in 25g. of deionized water. After 15 minutes at about 70°C, another charge of the t-BHP solution and sodium sulfoxylate formaldehyde solution was added. After another 15 minutes, 21.6g. of styrene monomer was added to the kettle and a third charge of a t-BHP solution and sodium sulfoxylate formaldehyde solution was added. The reaction temperature was maintained at about 70°C for another 15 minutes.

The reaction was then cooled to below 40°C and neutralized with ammonia (28%). The final product was cooled and filtered through a 100 mesh screen. The resulting polymer had a composition by weight of 39.47% ethylhexyl acrylate, 26.97% styrene, 25.0% acrylonitrile, 5.13% methacrylic acid and 3.43% phosphoethyl methacrylate. The resulting latex had a total solids of 41.7%, average particle size of 105 nanometers and viscosity of 1668 mNsm⁻² (centipoise).

### Example V

A phosphorus-containing polymer within the scope of this invention was prepared following the procedures of Ex. II, except that the monomers and amounts thereof were altered to give a polymer having a composition by weight of 48.4% butyl acrylate, 44.4% methyl methacrylate, 1.5% methacrylic acid and 5.7% phosphoethyl methacrylate. The resulting latex had a total solids of 40.0%, viscosity of 20 mNsm⁻² (centipoise) and average particle size of 113 nanometers.

### Example VI (comparative)

An acrylic polymer containing no phosphorus groups was prepared following the procedures of Example II. The monomers and amounts thereof were altered to give a polymer having a final composition by weight of 49.8% of butyl acrylate, 45.7% methyl methacrylate, and 4.5% methacrylic acid. The resulting latex had a total solids of 40.7%, viscosity of 26 mNsm⁻² (centipoise) and average particle size of 102 nanometers.

### Example VII

The phosphorus-group-containing polymer composition of Example III was mixed with a zinc ammonium carbonate solution to give a mixture containing 0.67% zinc based on total weight of the polymer compositions (1.9% Zn based on solid weight of polymer. This mixture was then evaluated for properties of film formation, storage stability, solvent and chemical resistance and print resistance. Film formation was tested by casting said composition on Bonderite 1000 steel panels to give a dry film thickness of about 0.003 cm (1.2 mils).

The panels were dried at 150°F (65.5°C) or 30 minutes and allowed to stand at room temperature for 7 days. The films were visually examined for continuous film formation and appearance.

Solvent resistance was measured following standard ASTM test method and using dimethylformamide solvent. Poor solvent resistance is indicated by a sample which dissolves or has a relatively high swell ratio. Print and block resistance were measured using standard test procedures and rated on a scale of 0 to 5, with 0=good and 5=poor.

Methy ethyl ketone solvent rub resistance was measured following standard test procedures and rated according to the number of rubs before the polymer film is visibly affected by the solvent.

Chemical salt resistance was measured by subjecting the panels to a salt spray for 72 hours. The films were visually examined and rated (10=good, 0-poor).

Storage stability was measured by allowing samples of the zinc-containing polymeric mixture to stand at 140°F (60°C) for 10 days. The sample were then physically examined and measured for viscosity. The samples were rated as FAIL if there were any gel formation and greater than ten-fold increase in viscosity.

### Example VIII (comparative)

The polymer composition prepared in Ex. I was tested for film formation, storage stability, solvent and chemical resistance and print resistance following the procedures of Ex. VII, except that no zinc ammonium carbonate was added to the composition. The results of these tests are presented in Table I (infra).

### Example IX (comparative)

The polymer composition prepared in Ex. VI was tested as in Ex. VII, except that no zinc ammonium carbonate was added to the composition. The results are presented in Table I (infra).

**TABLE I**

| Sample: | Ex.VII | Ex. VIII (comparative) | Ex.IX (comparative) |
|---|---|---|---|
| Test: | | | |
| Film | yes | yes | yes |
| Formation | yes | yes | yes |
| Stability | pass | pass | pass |
| Solvent Resistance (swell ratio) | 3.9 | dissolved | dissolved |
| Solvent Resistance (MEK rubs) | >200 | 30 | 15 |
| Print Resistance | 2 | 4 | 5 |
| Block Resistance | 1 | 5 | 5 |
| Salt spray | 9.5 | 4.5 | 3 |

The above results demonstrate that the composition of this invention(Ex. VII) has improved solvent resistance, print resistance, block resistance and chemical resistance while maintaining good film formation and storage stability.

### Example X

The polymer composition prepared in Ex. I was mixed with insoluble, solid zinc oxide pigment at a weight ratio of polymer composition to zinc oxide of 60:40. The mixture was evaluated for film formation following the procedure of Ex. VII. No film formed from the mixture and only a dry powder resulted. The composition was also tested for storage stability and rated as FAIL because complete gelation occurred.

### Example XI

The polymer composition prepared in Ex. VI was mixed with a zinc ammonium carbonate solution to give a mixture containing 0.67% zinc (1.9% Zn based on solid wt. of polymer). The composition was tested for storage stability as in Ex. VII and was rated as FAIL. The composition was also tested for solvent resistance as in Ex. VII and completely dissolved in dimethylformamide.

### Example XII

The polymer composition prepared in Ex. V was mixed respectively with a variety of water-soluble, polyvalent metal solutions to form compositions within the scope of this invention. A control sample was also prepared containing none of the metal solutions. The samples were formulated according to the following recipe:

| Sample: (grams) | A | B | C | D(control) |
|---|---|---|---|---|
| Ingredients: | | | | |
| Polymer composition (40% solids) | 62.5 | 62.5 | 62.5 | 62.5 |
| Zn CO₃,4NH₃ (8.2% Zn) | 5.82 | - | - | - |
| ZrCO₃,4NH₃ (17%Zr) | - | 3.91 | - | - |
| NiCO₃ (81.2% solids) | - | - | 1.07 | - |
| NH₄OH (14%) | 1.5 | 2.5 | 3.9 | 2.5 |
| butyl carbitol* | 5.0 | 5.0 | 5.0 | 5.0 |
| Thickener | 2.5 | 1.0 | 1.0 | 1.0 |

| | | | | |
|---|---|---|---|---|
| *diethylene glycol monobutyl etherHt | | | | |

These samples were tested for solvent resistance as in Ex. VII. The results are presented below:

| Sample: | A | B | C | D |
|---|---|---|---|---|
| MEK rubs | >200 | >200 | >200 | 15 |

| Swell Ratio: | | | | |
|---|---|---|---|---|
| (tetrahydrofuran) | 5.4 | 4.1 | 4.9 | gelled |
| (dimethyl formamide) | 4.5 | 2.7 | 4.1 | dissolved |

## Claims

1. A process comprising applying to a substrate a polymer composition comprising
a) one or more polymer(s) having pendant and/or terminal phosphorus group(s), wherein the phosphorus group(s) is (are) derived from a polymerizable monomer having a phosphorus group; and
b) one or more water-soluble polyvalent metal compound(s);
and crosslinking the phosphorus groups with the polyvalent metal compound.

2. A process according to claim 1 wherein the amount of polymer present in the composition is from 30% to 99% by weight based on the total dry weight of the composition.

3. A process according to claim 1 or claim 2 wherein the amount of a) present in the composition is 2% to 50% by weight based on the total weight of polymer in the composition.

4. A process according to any one of the preceding claims wherein the molecular ratio of the polyvalent metal to the phosphorus group(s) ranges from 1:4 to 2:1.

5. A process according to any one of the preceding claims wherein the composition comprises a volatile chelating agent.

6. A process of preparing a polymer composition for subsequent use as a coating and adhesive, the process comprising polymerising a polymerisable monomer having a phosphorus group to form a polymer having pendant and/or terminal phosphorus groups; and blending the polymer with one or more water-soluble polyvalent metal compound(s).

7. An aqueous polymer composition for subsequent use as a coating and adhesive comprising
a) one or more polymer(s) having pendant and/or terminal phosphorus group(s), wherein the phosphorus group(s) is (are) derived from a polymerizable monomer having a phosphorus group;
b) one or more water-soluble polyvalent metal compound(s); and
c) water.

8. A composition as claimed in claim 7, wherein the amount of polymer present in the composition is from 30% to 99% by weight based on the total dry weight of the composition.

9. A composition as claimed in claim 7 or claim 8 wherein the amount of a) present in the composition is 2% to 50% by weight based on the total weight of polymer in the composition.

10. A composition as claimed in any one of claims 7 to 9 wherein the molecular ratio of the polyvalent metal to the phosphorus group(s) ranges from 1:4 to 2:1.

11. A composition as claimed in any one of claims 7 to 10 wherein the composition comprises a volatile chelating agent.

12. A one container system comprising a composition according to claim 11.

## Patentansprüche

1. Verfahren, umfassend ein Auftragen einer Polymerzusammensetzung aufein Substrat, welche Polymerzusammensetzung umfaßt:
a) ein oder mehrere Polymere mit einer oder mehreren hängenden und/oder terminalen Phosphorgruppen, wobei die Phosphorgruppe(n) von einem polymerisierbaren Monomer mit einer Phosphorgruppe abgeleitet ist (sind); und
b) ein oder mehrere wasserlösliche, mehrwertige Metallverbindungen;
und ein Vernetzen der Phosphorgruppen mit der mehrwertigen Metallverbindung.

2. Verfahren nach Anspruch 1, wobei die Menge an Polymer, welches in der Zusammensetzung vorhanden ist, von 30 Gew.-% bis 99 Gew.-%, bezogen auf das Gesamttrockengewicht der Zusammensetzung, ist.

3. Verfahren nach Anspruch 1 oder Anspruch 2, wobei die Menge an in der Zusammensetzung vorhandenem a) 2 Gew.-% bis 50 Gew.-%, bezogen auf das Gesamtgewicht von Polymer in der Zusammensetzung, ist.

4. Verfahren nach einem der vorhergehenden Ansprüche, wobei das Molekularverhältnis des mehrwertigen Metalls zu der (den) Phosphorgruppe(n) von 1 : 4 bis 2 : 1 reicht.

5. Verfahren gemäß einem der vorhergehenden Ansprüche, wobei die Zusammensetzung einen flüchtigen Chelatbildner umfaßt.

6. Verfahren zum Herstellen einer Polymerzusammensetzung für eine anschließende Verwendung als eine Beschichtung und als ein Klebstoff, welches Verfahren umfaßt: Polymerisieren eines polymerisierbaren Monomers, welches eine Phosphorgruppe aufweist, um ein Polymer zu bilden, welches hängende und/oder terminale Phosphorgruppen besitzt; und Mischen des Polymers mit einer oder mehreren wasserlöslichen, mehrwertigen Metallverbindungen.

7. Wäßrige Polymerzusammensetzung für eine anschließende Verwendung als eine Beschichtung und als ein Klebstoff, umfassend:
a) ein oder mehrere Polymere mit einer oder mehreren hängenden und/oder terminalen Phosphorgruppen, wobei die Phosphorgruppe(n) von einem polymerisierbaren Monomer mit einer Phosphorgruppe abgeleitet ist (sind);
b) ein oder mehrere wasserlösliche, mehrwertige Metallverbindungen; und
c) Wasser.

8. Zusammensetzung, wie in Anspruch 7 beansprucht, wobei die Menge an Polymer, welches in der Zusammensetzung vorhanden ist, von 30 Gew.-% bis 99 Gew.-%, bezogen auf das Gesamttrockengewicht der Zusammensetzung, ist.

9. Zusammensetzung, wie in Anspruch 7 oder in Anspruch 8 beansprucht ist, wobei die Menge an in der Zusammensetzung vorhandenem a) 2 Gew.-% bis 50 Gew.-%, bezogen auf das Gesamtgewicht von Polymer in der Zusammensetzung, ist.

10. Zusammensetzung, wie in einem der Ansprüche 7 bis 9 beansprucht, wobei das Molekularverhältnis des mehrwertigen Metalls zu der (den) Phosphorgruppe(n) von 1 : 4 bis 2 : 1 reicht.

11. Zusammensetzung, wie in einem der Ansprüche 7 bis 10 beansprucht, wobei die Zusammensetzung einen flüchtigen Chelatbildner umfaßt.

12. Ein-Behälter-System, umfassend eine Zusammensetzung gemäß Anspruch 11.

## Revendications

1. Procédé consistant à appliquer à un substrat une composition de polymères comprenant:
a) un ou plusieurs polymères ayant un ou plusieurs groupes phosphore terminaux et/ou pendants, dans lesquels le ou les groupes phosphore sont dérivés d'un monomère polymérisable ayant un groupe phosphore; et
b) un ou plusieurs composés de métal polyvalent hydrosolubles;
et à réticuler les groupes phosphore avec le composé de métal polyvalent.

2. Procédé selon la revendication 1, dans lequel la quantité de polymère présente dans la composition est de 30% à 99% en poids par rapport au poids sec total de la composition.

3. Procédé selon la revendication 1 ou 2, dans lequel la quantité de a) présente dans la composition est de 2% à 50% en poids par rapport au poids total du polymère dans la composition.

4. Procédé selon l'une quelconque des revendications précédentes, dans lequel le rapport moléculaire du métal polyvalent au(x) groupe(s) phosphore est compris entre 1:4 et 2:1.

5. Procédé selon l'une quelconque des revendications précédentes, dans lequel la composition comprend un agent chélatant volatil.

6. Procédé de préparation d'une composition de polymères pour une utilisation ultérieure en tant que revêtement et adhésif, le procédé consistant à polymériser un monomère polymérisable ayant un groupe phosphore pour former un polymère ayant des groupes phosphore terminaux et/ou pendants; et à mélanger le polymère avec un ou plusieurs composés de métal polyvalent hydrosolubles.

7. Composition aqueuse de polymères pour une utilisation ultérieure en tant que revêtement et adhésif comprenant:
a) un ou plusieurs polymères ayant un ou plusieurs groupes phosphore terminaux et/ou pendants, dans lesquels le ou les groupes phosphore sont dérivés d'un monomère polymérisable ayant un groupe phosphore;
b) un ou plusieurs composés de métal polyvalent hydrosolubles; et
c) de l'eau.

8. Composition selon la revendication 7, dans laquelle la quantité de polymère présente dans la composition est de 30% à 99% en poids par rapport au poids sec total de la composition.

9. Composition selon la revendication 7 ou 8, dans laquelle la quantité de a) présente dans la composition est de 2% à 50% en poids par rapport au poids total de polymère dans la composition.

10. Composition selon l'une quelconque des revendications 7 à 9, dans laquelle le rapport moléculaire du métal polyvalent au(x) groupe(s) phosphore est compris entre 1:4 et 2:1.

11. Composition selon l'une quelconque des revendications 7 à 10, dans laquelle la composition comprend un agent chélatant volatil.

12. Système à un récipient comprenant une composition selon la revendication 11.
